# EUROPEAN PATENT APPLICATION

(11) **EP 4 570 489 A1**
(43) Date of publication of application: **18.06.2025**
(21) Application number: 23215913.7
(22) Date of filing: 12.12.2023
(51) Int. Cl.: B32B 3/26, B32B 5/02, B32B 5/18, B32B 5/24, B32B 5/26, B32B 7/12, B32B 27/12, B32B 29/02, B32B 21/10

(54) **MULTI-LAYERED ACOUSTIC DAMPING PANEL, INSTALLATIONS, METHOD, SAW BLADE AND SAW FOR MANUFACTURE THEREOF**

(71) Applicant: Garpco Innovations AB, 554 54 Jönköping (SE)
(72) Inventor: Strand, Markus, 582 28 Linköping (SE)
(74) Representative: AWA Sweden AB

(57) **Abstract**

A multi-layered acoustic damping panel (1) comprises a décor layer (100), defining a principal plane (XZ), a back layer (11) formed of a porous three-dimensional acoustic damping material, and a reinforcement layer (101) in the form of a two-dimensional sheet, film or web, the reinforcement layer (101) having: a first surface (1010) and a second surface (1011), opposite the first surface (1010). The décor layer (100) is bonded to the first surface (1010) of the reinforcement layer (101), and the back layer (11) is bonded to the second surface (1011) of the reinforcement layer (101).

A method of manufacturing a multi-layered acoustic damping panel is also disclosed.

## Description

### Technical field

The present disclosure relates to a multi-layered acoustic damping panel, installations comprising such a panel, a method of manufacturing such a panel, a saw blade and a saw, which are suitable for use in the manufacturing of such a panel.

### Background

The noise environment in both public and private spaces can be improved with the help of acoustic damping panels. These panels do not only have a functional purpose, they also need to have a pleasing appereance, since they usually are attached to the interior wall and/or ceiling and will therefore have a great impact on the appearance of a room.

A known acoustic damping panel comprises a wood fiber board, for example MDF, that is attached to an acoustic damping layer. A way to give this type of panel a more pleasing appereance is to add a decorative layer, for example a laminate or veneer, to the wood fiber board. The wood fiber board makes the panel have a high weight which makes it difficult to install. The installation process also includes dismantling electrical installations, removing skirting boards and sawing the acoustic damping panel, leading to a cumbersome installation process.

A known solution to this problem is using acoustic damping panels provided with a decorative layer directly attached to an acoustic damping layer, as disclosed in the German utility model registration DE202023101210U1. These acoustic damping panels weigh much less than the acoustic damping panels including a wood fiber board and are therefor easier to install.

However, these acoustic damping panels also have some disadvantages. Acoustic damping panels are often provided with grooves separating slats, which are typically arranged to extend vertically or horizontally, and through which sound waves can pass more readily to be absorbed by the acoustic damping layer. Hence, production of such acoustic damping panels may involve the cutting of grooves into the panels by milling. However, milling is a relatively slow technique, and it is difficult to achieve smooth groove edges when milling into a porous acoustic damping layer.

Yet another problem is that the decorative layer of these acoustic damping panels, when made from a wood-based material, are prone to warping if exposed to moisture.

Hence, there is a need for an improved acoustic damping panel.

### Summary

It is an objective of the present disclosure to provide an improved acoustic damping panel, as well as a method for its manufacture. Further objectives include the provision of improved installations of acoustic damping panels.

The invention is defined by the appended independent claims, with embodiments being set forth in the dependent claims, in the following description and in the attached drawings.

According to a first aspect, there is provided a multi-layered acoustic damping panel, comprising a décor layer, defining a principal plane, a back layer formed of a porous three-dimensional acoustic damping material, and a reinforcement layer in the form of a two-dimensional sheet, film or web. The reinforcement layer has a first surface, and a second surface, opposite the first surface. The décor layer is bonded to the first surface of the reinforcement layer, and the back layer is bonded to the second surface of the reinforcement layer.

By décor layer is meant a layer which provides a front face of the acoustic damping panel, i.e. the surface that is visible towards the space delimited by the wall or ceiling on which the panel is mounted.

By back layer is meant a layer which provides a back face of the acoustic damping panel. The back layer provides most of the acoustic damping function of the panel.

By reinforcement layer is meant a layer which stabilizes the décor layer. The reinforcement layer makes it possible to use a saw instead of milling to cut grooves into the acoustic damping panel. By using a saw, the disadvantages of milling is avoided which makes it easier to achieve smooth groove edges and allows for a faster cutting process.

Another advantage with the reinforcement layer is that it reduces the risk of the décor layer warping when exposed to moisture if the décor layer is formed out of a wood-based material.

Hence, the reinforcement layer may, by itself, or in combination with an adhesive, be moisture impermeable, so as to form a moisture barrier between the back layer and the décor layer.

The reinforcement layer also stabilizes the décor layer such that it is possible to cut out a portion of the back layer with a decreased risk of the décor layer being damaged. This cut-out portion can then be used for integrated installations of, for example storage devices.

With the reinforcement layer, it is not necessary to for the acoustic damping panel to comprise a wood fiber board. Having an acoustic damping panel without a wood fiber board will decrease the weight from 7 kg/m2 to 1.5 kg/m2, which is a weight reduction of 79 %.

The decreased weight simplifies the installation process. The installation can be done with, for example a rivet gun, adhesive tape or glue. The installation time is halved compared to installing acoustic damping panels comprising a wood fiber board.

The decreased weight also decreases the transport costs.

The thickness of the acoustic damping panel without the wood fiber board is smaller than that of acoustic damping panels comprising wood fiber boards. The thinner acoustic damping panels decreases the transport volume with about 70 %. This is both a cost advantage and an environmental advantage.

The decreased thickness also simplifies the installation process. Dismantling electrical installations and removing skirting boards is not necessary.

Also, the panel can be cut with a knife or scissors, such that no sawing is needed.

The décor layer may be formed of a wood-based material, in particular veneer, wood veneer, engineered wood, or reconstituted wood; or from a laminate.

It is noted that the "the décor layer being formed of" does not exclude further surface treatment of the décor layer, for example oil, wax, lacquer, pigment or paint.

If the décor layer is formed of laminate, it may also comprise an optical layer and a wear layer. The wear layer may be formed of a reinforced polymer material. The wear layer may include aluminum oxide and a binder. The wear layer may also be abrasion resistant. The optical layer may be printed. For example, the optical layer may be printed to provide the appearance of wood, stone or the like.

The use of a moisture impermeable reinforcement layer is particularly advantageous in the case where the décor layer is formed by a veneer, in particular of oak or ash, and where the bonding of the back layer to the reinforcement layer is provided by a water based glue, as this reduces the risk of water-induced warping and/or splitting of the wood veneer.

The décor layer may have a thickness of about 0.1-0.9 mm, preferably about 0.1-0.3 mm, about 0.3-0.5 mm, about 0.5-0.7 mm or about 0.7-0.9 mm.

In particular, the décor layer may have a thickness of about 0.6 mm.

The back layer may be formed of a fiber material, in particular a synthetic fiber material.

The synthetic fiber material may be type synthetic fiber material, such as polyester. The back layer may be formed of a non-organic material, in particular not of wood or any wood-based material, such that the back layer is free from wood and other organic materials. The fiber material may be a three-dimensional non-woven material. Non-woven fiber materials may be bonded by melt bonding and/or by being bonded by a binder. Alternatively, the fiber material may be a felt, a felt-like material, a fleece or a fleece-like material. As further examples, the back layer may be formed of a three-dimensional woven or knitted fabric

The back layer may be formed of an expanded polymer material, such as foam or a sponge-like material.

The expanded polymer material may be any type of sound-absorbing expanded polymer rubber, or rubber-like or rubber material.

The reinforcement layer may be formed from paper, a paper-like material or a polymeric material.

The reinforcement layer may also be formed from a textile, a non-woven material, a woven material, or a polymer film.

The reinforcement layer may have a thickness of about 0.1-0.7 mm, preferably about 0.1-0.3 mm, about 0.3-0.5 mm or about 0.5-0.7 mm.

In particular, the thickness of the reinforcement layer may be about 0.4 mm.

At least one of the bonding between the back and the reinforcement layer and/or the bonding between the décor layer and the reinforcement layer may be provided by an adhesive, preferably a hot-melt adhesive.

The adhesive may be activated by heating and/or by pressure. In particular, the bonding may be provided with a solvent-free binding agent.

The bonding between the décor layer and the reinforcement layer may be provided by an adhesive, preferably a hot-melt adhesive and the bonding between the back layer and the reinforcement layer may be provided by a glue.

With the adhesive covering the reinforcement layer, a moisture barrier can be provided also in the case where the reinforcement layer by itself is not moisture-impermeable. Hence, this facilitates the use of the glue that is solvent-based, in particular a water-based glue.

The back layer may have a thickness of about 3-6 mm, preferably about 3-4 mm, about 4-5 mm or about 5-6 mm.

The back layer may have a density of about 150-300 kg/m3, preferably about 150-180 kg/m3, about 180-200 kg/m3, about 200-240 kg/m3, about 240-260 kg/m3, or about 260-300 kg/m3.

The décor layer may present a plurality of slats, each pair of adjacent slats separated by a groove, wherein the grooves may extend through the décor layer, the reinforcement layer and into the back layer.

By providing slats separated by grooves, the acoustic damping panel becomes more easily bendable. The acoustic dampen panel may e.g. be more easily bendable around corners and along convex or concave surfaces or surface portions.

The grooves may extend in parallel with each other in the principal plane.

The grooves may have a rectangular shape, as seen from the front face. Alternatively, the grooves may have a square shape as seen from the front face. The pattern of the grooves may be a striped pattern, a checked pattern, a rectangular pattern or a squared pattern.

Slat edges facing a groove may present, as seen in a plane perpendicular to a longitudinal direction of the groove, an acute angle relative to a surface normal of the principal plane.

This angle may be about 1-70 degrees, preferably about 1-10 degrees, about 10-20 degrees, about 20-45 degrees, about 45-50 degrees, or about 50-70 degrees.

Back layer groove edges may present, as seen in a plane perpendicular to a longitudinal direction of the groove, an acute angle relative to a surface normal of the principal plane, in particular the same angle as that of the slat edges.

According to a second aspect, there is provided an installation comprising a panel as described above, mounted to a wall or a ceiling, a support comprising a mounting portion and a console portion, the support being mounted to the wall or ceiling. The mounting portion is arranged in a cut-out portion of the back layer and wherein the console portion extends out of the décor layer.

The support may be support for a storage device, such as a shelf, a closet rod, a basket, a tool holder, a hook, or the like.

The mounting portion it may be, for example a threaded flange which can be screwed to the wall.

By a console portion it may meant a portion which can be used as or attached to, for example a storage device.

By a cut-out portion of the back layer is understood that a portion of the back layer is cut away at the back face of the panel such that the mounting portion can fit inside a space left by the cut-away portion.

Installing the acoustic damping panel and the support in this way will give a floating appearance of the support since the mounting portion is hidden. This will give a room a more clean and modern appearance.

According to a third aspect, there is provided an installation, comprising a support surface, having an outwardly concave or convex portion, and a panel as described above, which is attached to the support surface. The concave or convex portion is single curved, and the panels are installed such that the slats extend perpendicular to the bending direction.

The support surface may be a shelf, a light source, a ventilation opening, a seat, or a loudspeaker. Installing the panel and the support surface in this way gives the supporting surface a floating appearance. This will give a room a more clean and modern appearance.

According to a fourth aspect, there is provided a method of installing a support for a shelf or the like on a wall or a ceiling, comprising providing a panel as described above, providing a support comprising a mounting portion and a console portion, cutting away a portion of the back layer while leaving the décor layer and the reinforcement layer, mounting the support with the mounting portion to the wall or ceiling, and mounting the panel such that the wall mounting portion is received in the cut-away portion of the back layer and console portion extends out of the décor layer.

According to a fifth aspect, there is provided a method of manufacturing a multi-layered acoustic damping panel, comprising providing a back layer, formed of a porous three-dimensional acoustic damping material, providing a décor layer defining a principal plane, providing a reinforcement layer, and bonding the back layer, the reinforcement layer and the décor layer to each other such that the reinforcement layer is sandwiched between the back layer and the décor layer.

It may be particularly advantageous to bond the reinforcement layer to the décor layer in a first bonding step, and to bond the reinforcement layer to the back layer in a second, subsequent, bonding step, as the reinforcement layer, by itself or together with an adhesive, may form a moisture barrier, which enables the use of a solvent-based glue, such as a water-based glue for the bonding of the reinforcement layer to the back layer.

At least one of the bonding of the reinforcement layer with the décor layer and/or the bonding of the reinforcement layer with the back layer may be provided by an adhesive, preferably a hot-melt adhesive.

The bonding between the décor layer and the reinforcement layer may be provided by an adhesive, preferably a hot-melt adhesive and the bonding between the back layer and the reinforcement layer may be provided by a glue.

The reinforcement layer, the décor layer and the back layer may be pressed in a direction perpendicular to the principal plane, preferably during heating.

The pressing may be provided by a press. The pressing may comprise heating of at least one of the layers being pressed, e.g. by use of a pre-heating arrangement, heated press plates or microwaves.

The method may further comprise limiting a compression of the panel.

The limiting of the compression may be provided with a limiting device. The limiting device may have the same height as a desired thickness of the acoustic damping panel. The limiting device may have a height that provides for a slightly greater compression than intended for the final product, as the material of the panel may be allowed to expand slightly after the pressing step.

The method may further comprise cutting a plurality of grooves into the décor layer and further into the back layer.

The cutting may be performed by a cutting tool. The cutting may be done with a saw equipment.

The cutting may be performed by a cutting tool which is caused to rotate about an axis that is parallel with the principal plane and perpendicular to the groove.

The cutting may comprise simultaneously cutting at least two grooves.

The cutting may comprise simultaneously cutting some or all of the grooves in a panel. The cutting may comprise simultaneously cutting grooves into the acoustic damping panel while performing a relative movement between the cutting tool and the panel.

According to a sixth aspect, there is provided a saw blade for cutting slats into a multi-layered acoustic damping panel, the saw blade comprising a plurality of saw teeth extending radially from a circular saw blade body, wherein the saw blade is rotatable in a blade plane that is perpendicular to an axis of rotation, wherein at least some of the saw teeth present a cutting profile in a plane containing the axis of rotation and a radially outermost portion of the saw tooth, the cutting profile being symmetric about the blade plane and presenting a tapering portion, which tapers in a direction radially outwardly from the axis of rotation and which has a taper angle relative to the blade plane of about 1-70 degrees, preferably about 1-10 degrees, about 10-20 degrees, about 20-45 degrees, about 45-50 degrees, or about 50-70 degrees.

The saw blade taper angle is adapted to reduce the risk of splinters and pickups in the décor layer. The slats will not have a flat surface if the taper angle is too large. This can negatively affect the appearance of the panel and increase the risk of damage to the back layer. The tapering portion also reduces the risk of saw dust collecting in the slats.

The cutting profile may present a straight radially outermost edge which is parallel with the axis of rotation.

In particular, the outermost edge may present a portion which is approximately straight over approximately 10-30 % of a maximum width of the cutting profile.

As seen in the blade plane, a front angle relative a radial direction of at least some of the saw teeth may be about 0-30 degrees, preferably about 0-5 degrees, about 5-10 degrees, about 10-20 degrees, about 20-25 degrees, or about 25-30 degrees.

According to a seventh aspect, there is provided a multi-blade saw comprising a plurality of saw blades as described above, wherein the saw blades are rotatable about respective rotation axes, which are mutually parallel with each other.

Cutting grooves into the panel using a multi-blade saw will decrease the processing time. The multi-blade saw may be designed to cut the plurality of slats into the entire acoustic damping panel simultaneously.

The saw blades may be rotatable about a common rotation axis.

The common rotation axis may be arranged on a common rotation axle.

The saw blades may be equi-distantly spaced along an axial direction of the rotation axis/axes.

The saw may further comprise a workpiece conveying mechanism, configured to cause a planar workpiece to move relative to the multi-blade saw, such that each saw blade is caused to cut a respective groove in the workpiece.

According to an eighth aspect, there is provided use of a saw as described above for cutting a plurality of grooves into a panel blank to form an acoustic damping panel, wherein at least some of the saw blades are caused to rotate around the common rotation axes, and wherein a relative movement of the saw and the panel is performed, such that the saw blades move in parallel with the principal plane to cut the plurality of grooves into the décor layer, reinforcement layer and further into the back layer.

### Brief description of the drawings

Fig. 1 is a schematic side view of an acoustic damping panel 1.
Figs 2a-2d schematically illustrate the process of producing an acoustic damping panel.
Fig. 3 schematically illustrates a multi-blade saw for use in cutting a plurality of grooves.
Figs 4a-4b schematically illustrate details of a saw blade.
Fig. 5 schematically illustrates a side view of a panel 1.
Fig. 6 Illustrates installation on wall with convex protrusions.
Fig. 7 Illustrates the acoustic damping panel 1 installation in relation to a light switch.
Fig. 8a-8c illustrate installation of a console for a storage device.

### Detailed description

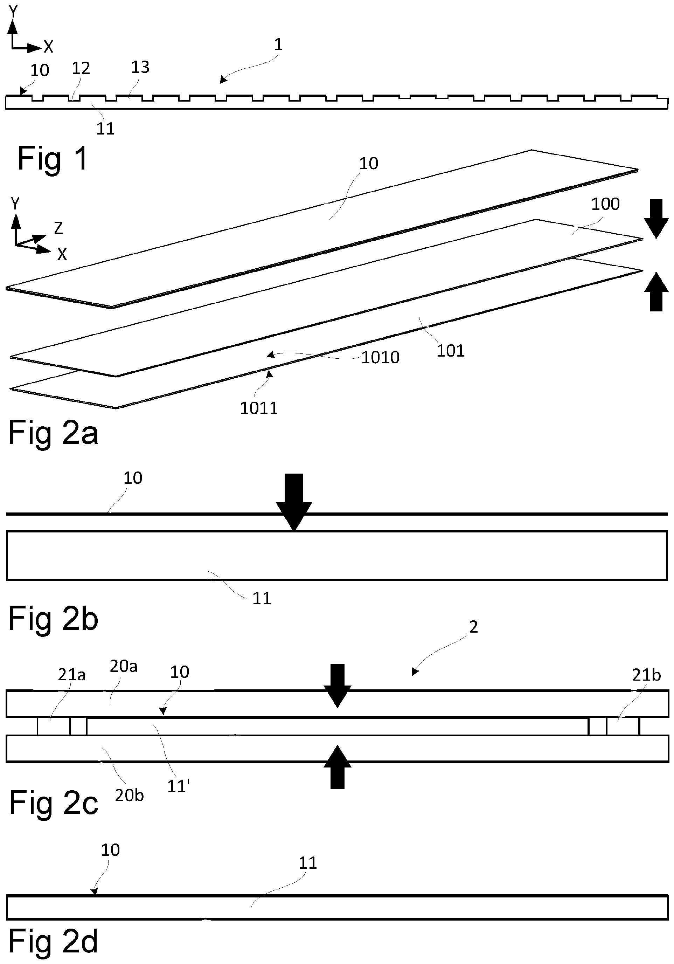

Fig. 1 schematically illustrates a side view of a multi-layered acoustic damping panel 1.

In the following description, directions and planes will be used as illustrated in Figs 1 and 2a.

A principal plane of the acoustic damping panel is formed by the XZ plane. Direction Y is a thickness direction of the acoustic damping panel. Hence, the side view provided in fig. 1 is in the XY plane.

The multi-layered acoustic damping panel 1 comprises a back layer 11, provding a back face of the acoustic damping panel. The back layer 11 may be formed of a fiber material, in particular a syntethic fiber material, such as polyester. The back layer 11 may be formed of a non-organic material, in particular not of wood or any wood-based material.

The fiber material may be a three-dimensional non-woven material. The non-woven material fibers may be bonded by melt bonding and/or bonded by a binder.

Alternatively, the fiber material may be a felt, a felt-like material, a fleece or a fleece-like material.

As further alternatives, the back layer 11 may be formed of a three-dimensional woven or knitted fabric. Alternatively, the back layer 11 may be formed of an expanded polymer material, such as foam, a sponge-like material or rubber.

The back layer 11 may have a thickness of about 3-6 mm, in particular about 3-4 mm, about 4-5 mm or about 5-6 mm. The back layer 11 may have a density of about 150-300 kg/m³, preferably about 150-180 kg/m³, about 180-200 kg/m³, about 200-240 kg/m³, about 240-260 kg/m³, or about 260-300 kg/m³.

In Fig. 2a, a décor layer 100 and a reinforcement layer 101 form a composite layer 10. The décor layer 100 provides a front face of the acoustic damping panel 1. The décor layer 100 may be formed of a wood-based material. The wood-based material may be a wood veneer, an engineered wood or a reconstituted wood. The wood veneer may have a surface treatment such as, for example oil, wax, lacquer, pigment or paint.

Alternatively, the décor layer 100 may be formed of a laminate. The laminate may comprise a wear layer and an optical layer. The wear layer may be formed of a reinforced polymer material. The wear layer may include aluminum oxide and a binder. The wear layer may also be abrasion resistant. The optical layer may be printed. The optical layer may be printed to provide the appearance of wood, stone or the like.

The décor layer 100 may have a thickness of about 0.1-0.9 mm, preferably about 0.1-0.3 mm, about 0.3-0.5 mm, about 0.5-0.7 mm or about 0.7-0.9 mm.

The reinforcement layer 101 is arranged between the back layer 11 and the décor layer 100. The reinforcement layer 101 is in the form of a two-dimensional sheet, film or web. The reinforcement layer 101 may be formed from a paper, a paper-like material, a textile, a non-woven material, a woven material, a polymer film or a polymeric material. The reinforcement layer 101 may have a thickness of about 0.1-0.7 mm, preferably about 0.1-0.3 mm, about 0.3-0.5 mm or about 0.5-0.7 mm.

The reinforcement layer 101 presents a first surface 1010 and a second surface 1011, opposite the first surface. The décor layer 100 is bonded to the first surface 1010 of the reinforcement layer 101. The back layer 11 is bonded to the second surface 1011 of the reinforcement layer 101.

The bonding of at least one of the bonding between the back layer 11 and the reinforcement layer 101 and/or the bonding between the décor layer 100 and the reinforcement layer 101 may be provided by an adhesive, which may be activated by heating and/or by pressure. A particular option is to use a hot-melt adhesive. In particular, the bonding is to be provided with a solvent-free binding agent.

The reinforcement layer 101 may be pre-impregnated, on at least one of the surfaces 1010, 1011, with a bonding agent before the bonding. Alternatively, the bonding agent may be applied to at least one of the surfaces 1010, 1011 of the reinforcement layer 101 before the bonding.

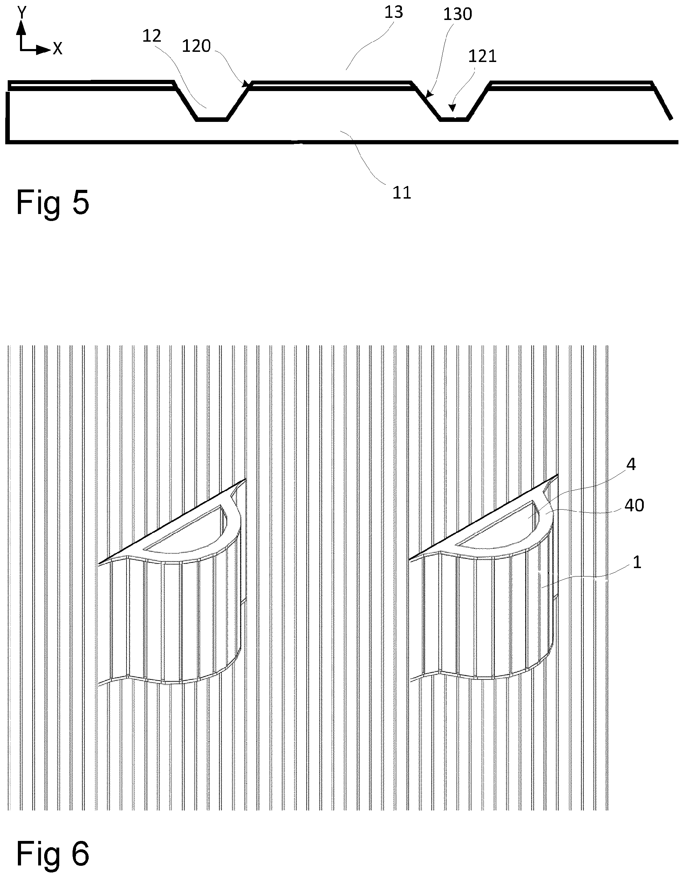

Fig. 5 schematically illustrates a detailed side view of the acoustic damping panel 1.

The acoustic damping panel 1 may comprise a plurality of slats 12. The slats 12 may be seperated by grooves 13. The slats 12 may be formed by the décor layer 100, the reinforcement layer 101 and part of the back layer 11. The grooves 13 may extend in the thickness direction Y from the front face of the panel 1, through the décor layer 100, the reinforcement layer 101 and into the back layer 11. The grooves 13 do not extend all the way through the back layer 11.

The slats 12 may have a rectangular shape, as seen from the front face.

Alternatively, the grooves 13 may have a square shape as seen from the front face.

The pattern of the grooves 13 may be a striped pattern, a checked patter, a rectangular pattern or a squared pattern.

The grooves 13 may have a cross section which tapers towards a groove bottom, and in particular, which tapers continuously from the front face to the groove bottom.

The grooves 13 may have a trapezoidal, U-shaped or V-shaped cross section.

The slats 12 may present slat edges 120. The slat edges 120 facing a groove 13 may present, as seen in a plane XY perpendicular to a longitudinal direction of the groove 13, an acute angle relative to a surface normal of the principal plane XZ. This angle is about 1-70 degrees, preferably about 1-10 degrees, about 10-20 degrees, about 20-45 degrees, about 45-50 degrees, or about 50-70 degrees.

The back layer groove edges 130 may present, as seen in the plane XY perpendicular to a longitudinal direction of the groove 13, an acute angle relative to a surface normal of the principal plane XZ, in particular the same angle as that of the slat edges 120.

The grooves 13 may have a total depth of about 20-80 % of an overall thickness of the panel, in particular about 20-30 %, about 30-40 %, about 40-50 %, about 50-60 % about 60-70 % or about 70-80 %. Particular groove depths may be about 2-5 mm, preferably about 2-3 mm, about 3-4 mm or about 4-5 mm. The grooves 13 may have a width of about 10-60 % of a width of the slats mm, in particular about 10-20 %, about 20-30 %, about 30-40 %, about 40-50 % or about 50-60 %. Particular groove widths may be about 2-4 mm, about 4-6 mm, about 6-8 mm or about 8-10 mm.

The slats 12 may present a flat surface 121. The surface may be textured, In particular when provided from a wood veneer or engineered wood.

A method of manufacturing the panel 1 is illustrated in Fig. 2a-2d. The method of manufacturing a multi-layered acoustic damping panel 1 comprises providing a back layer 11, formed of a porous three-dimensional acoustic damping material, providing a décor layer 100 defining a principal plane XZ, providing a reinforcement layer 101, bonding the back layer 11, the reinforcement layer 101 and the décor layer 100 to each other such that the reinforcement layer 101 is sandwiched between the back layer 11 and the décor layer 100.

The bonding of at least one of the bonding of the reinforcement layer 101 with the décor layer 100 and/or the bonding of the reinforcement layer 101 with the back layer 11 may be provided by an adhesive, preferably a hot-melt adhesive. Applying the adhesive may be done with a glue spreader, glue gun, or a gluing machine. The bonding may in particular be provided by a solvent-free binding agent.

In particular, in a first step, the reinforcement layer 101 may be joined with the décor layer 100 by means of an adhesive, such as a hot-melt adhesive, to form the composite layer 10.

It is possible to provide a stack of several composites of reinforcement layer bonding agent and décor layer, which are pressed together simultaneously.

In a second step, the composite layer 10 may be bonded to the back layer 11 by means of any type of glue, including a solvent based glue, such as a water based glue, with the reinforcement layer and/or the adhesive providing a moisture barrier, which prevents the solvent from interacting with the décor layer.

The reinforcement layer 101, the décor layer 100 and the back layer 11 may be pressed together in a direction perpendicular to the principal plane XZ, preferably during heating. Before the pressing, the back layer 11 may be in an uncompressed state with a density of about 30-220 kg/m³, preferably about 30-100 kg/m³, about 100-150 kg/m³, 150-180 kg/m³, 180-200 kg/m³, 200-220 kg/m³. The pressing may be provided by a press 2. The press may comprise heated press plates 20. The plates 20 may be formed of steel and/or a ceramic material.

The method may also comprise limiting a compression of the panel 1 when it reaches a desired compressed state 11'. The limiting of the compression may be provided with a limiting device 21. The limiting device 21 may have the same height as a desired thickness of the acoustic damping panel 1. The limiting device 21 may have a height that provides for a slightly greater compression than intended for the final product, as the material of the panel may be allowed to expand slightly after the pressing step.

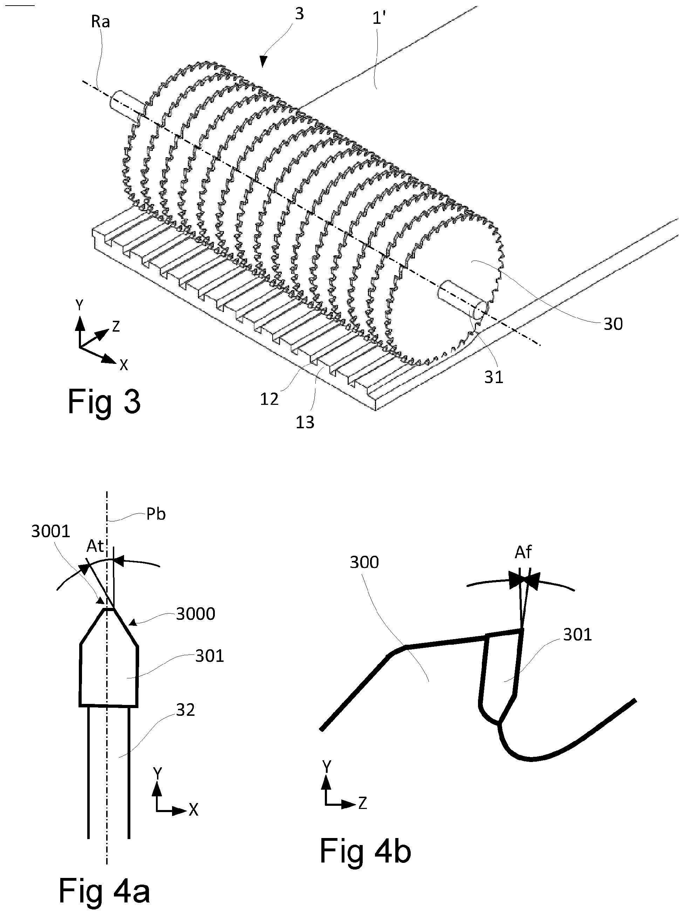

Fig. 3 illustrates the cutting of a plurality of grooves 13. The method of manufacturing may comprise cutting a plurality of grooves 13 into the décor layer 100 and further into the back layer 11. The cutting may be performed by a cutting tool. The cutting tool may be caused to rotate about an axis that is parallel with the principal plane XZ and perpendicular to the groove 13. The cutting may comprise simultaneously cutting at least two grooves 13, and in particular all of the grooves in a panel. The cutting may comprise simultaneously cutting grooves 13 into the entire acoustic damping panel 1 while performing a relative movement between the cutting tool and the panel. The cutting may be done with a saw equipment.

A multi-blade saw 3 is illustrated in fig. 3, comprising a plurality of saw blades 30, which are arranged on a common axle 31 to be rotatable about a common axis of rotation Ra.

The saw blades 30 may be equi-distantly spaced along the common rotation axis Ra. Intermediate devices may be placed between the saw blades 30, providing space between the saw blades 30.

It is understood that the saw blades 30 may be mounted on two or more parallel axles, such that adjacent grooves may be cut successively.

The multi-blade saw 3 may have a width such that it can cut the plurality of slats 12 into the entire acoustic damping panel 1 simultaneously.

The saw blades 30 may be rotated such that saw teeth will cut down into the panel blank at a leading edge of the saw blade relative to the panel blank. Hence, as illustrated in fig. 3, the blades would rotate in the clockwise direction.

At least some of the saw blades 30 comprise a circular saw blade body 32, which is typically formed of a metal. A plurality of teeth 300 may extend radially from the blade body 32.

At least some of the teeth 300 may comprise a wear portion 301, which may be formed by an inset of a material having greater hardness than that of the blade body 32.

Alternatively, wear portions 301 may be formed by a portion of the blade body that has been subjected to a hardening treatment and/or to a surface coating treatment.

The saw blade 300 may present a blade plane Pb, which may be perpendicular to the rotation axis Ra. Hence, the saw blade 300 may be rotatable in the blade plane Pb.

A radially outermost portion of at least some of the teeth 300 may present a cutting profile, as illustrated in Fig. 4a and as seen in a plane that contains the axis of rotation Ra and the radially outermost portion of the saw tooth 300. The cutting profile may be symmetric about the blade plane Pb and present a tapering portion 3000, adapted to provide the angle of the groove wall 120, 130.

The tapering portion 3000 presents a taper angle At relative to the blade plane Pb. This angle is about 1-70 degrees, preferably about 1-10 degrees, about 10-20 degrees, about 20-45 degrees, about 45-50 degrees, or about 50-70 degrees. The cutting profile may present a radially outermost edge 3001 which is parallel with the axis of rotation Ra.

Fig. 4b illustrates a front angle Af relative a radial direction of at least some of the saw teeth 300 as seen in the blade plane Pb. The front angle Af may be about 0-30 degrees, preferably about 0-5 degrees, about 5-10 degrees, about 10-20 degrees, about 20-25 degrees, or about 25-30 degrees.

Fig. 6 Illustrates an installation on a wall having a convex protrusion, or a concave recess. A support surface 4 comprises an outwardly concave or convex surface portion 40. The support surface 4 is single curved. The support surface 4 may be a shelf, a light source, a ventilation opening or a loudspeaker. The multi-layered acoustic damping panel 1 is attached to the support surface 4. The multi-layered acoustic damping panels 1 may be installed such that the slats 12 extends perpendicular to a bending direction.

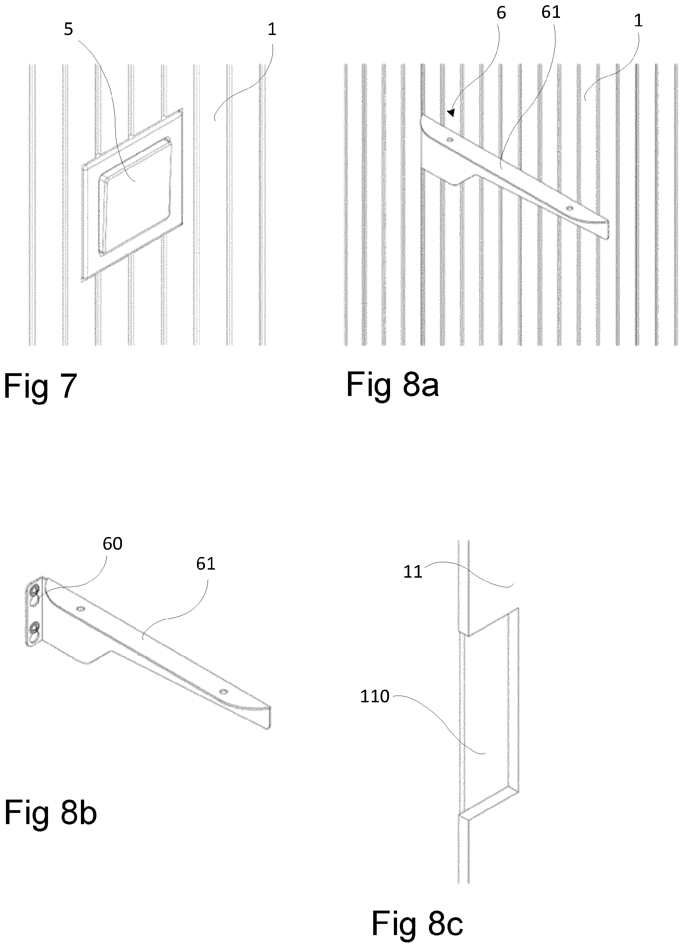

Fig. 7 Illustrates an advantage of a thin panel 1 in relation to e.g. a light switch 5. A light switch 5 is installed such that the light switch 5 is not excessively recessed into the multi-layered acoustic damping panel 1.

Fig. 8a-8c illustrate installation of a console for a storage device.

Fig. 8a illustrates a support 6. The support 6 comprises a mounting portion 60 (fig. 8b) and a console portion 61. The console portion 61 may be configured to provide a support for a storage device, such as a shelf, a closet rod, a basket, a hook, or the like.

Fig. 8b illustrates the support 6 in its entirety.

Fig. 8c illustrates a panel 1 as seen from its rear face, with a cut-out portion 110 formed in the back layer 10. When a support 6 is mounted to a wall or a ceiling, the mounting portion 60 may be received in the cut-out portion 110 in the back layer 11, while the console portion 61 extends out of the décor layer 100, such that the mounting portion is effectively obscured by the panel 1.

The acoustic damping panel 1 installation can be used for wall based storage systems comprising a horizontal strip ("top track"), to which one or more vertical strips ("hang standards") may be mounted. Consoles or the like may be attached to the vertical strips. In particular the horizontal strip may be arranged in the cut-out portion of the back layer.

## Claims

1. A multi-layered acoustic damping panel (1), comprising:
a décor layer (100), defining a principal plane (XZ),
a back layer (11) formed of a porous three-dimensional acoustic damping material, and
a reinforcement layer (101) in the form of a two-dimensional sheet, film or web, the reinforcement layer (101) having:
a first surface (1010), and
a second surface (1011), opposite the first surface (1010),
wherein the décor layer (100) is bonded to the first surface (1010) of the reinforcement layer (101), and the back layer (11) is bonded to the second surface (1011) of the reinforcement layer (101).

2. The panel (1) according to claim 1, wherein the décor layer (100) is formed of a wood-based material, in particular veneer, wood veneer, engineered wood, or reconstituted wood; or from a laminate.

3. The panel (1) according to claim 1 or 2, wherein the back layer (11) is formed of a fiber material, in particular a synthetic fiber material.

4. The panel (1) according to any of the preceding claims, wherein at least one of the bonding between the back layer (11) and the reinforcement layer (101) and/or the bonding between the décor layer (100) and the reinforcement layer (101) is provided by an adhesive, preferably a hot-melt adhesive.

5. The panel according to any one of the preceding claims, wherein the bonding between the décor layer (100) and the reinforcement layer (101) is provided by an adhesive, preferably a hot-melt adhesive and wherein the bonding between the back layer (11) and the reinforcement layer (101) is provided by a glue.

6. The panel (1) according to any of the preceding claims, wherein the décor layer (100) presents a plurality of slats (12), each pair of adjacent slats (12) separated by a groove (13), wherein the grooves (13) extend through the décor layer (100), the reinforcement layer (101) and into the back layer (11).

7. The panel (1) according to claim 6, wherein slat edges (120) facing a groove (13) present, as seen in a plane perpendicular to a longitudinal direction of the groove (13), an acute angle relative to a surface normal of the principal plane (XZ).

8. The panel (1) as claimed in claim 6 or 7, wherein back layer groove edges (130) present, as seen in a plane perpendicular to a longitudinal direction of the groove (13), an acute angle relative to a surface normal of the principal plane (XZ), in particular the same angle as that of the slat edges (120).

9. An installation comprising:
a panel (1) as claimed in any one of claims 1-8, mounted to a wall or a ceiling,
a support (6) comprising a mounting portion (60) and a console portion (61), the support (6) being mounted to the wall or ceiling,
wherein the mounting portion (60) is arranged in a cut-out portion (110) of the back layer (11) and wherein the console portion (61) extends out of the décor layer (100).

10. A method of installing a support for a shelf or the like on a wall or a ceiling, comprising:
providing a panel (1) as claimed in any one of claims 1-8,
providing a support (6) comprising a mounting portion (60) and a console portion (61),
cutting away a portion (110) of the back layer (11) while leaving the décor layer (100) and the reinforcement layer (101),
mounting the support (6) with the mounting portion (60) to the wall or ceiling, and
mounting the panel (1) such that the wall mounting portion (60) is received in the cut-away portion (110) of the back layer (11) and console portion (61) extends out of the décor layer (100).

11. A method of manufacturing a multi-layered acoustic damping panel (1), comprising:
providing a back layer (11), formed of a porous three-dimensional acoustic damping material,
providing a décor layer (100) defining a principal plane (XZ),
providing a reinforcement layer (101), and
bonding the back layer (11), the reinforcement layer (101) and the décor layer (100) to each other such that the reinforcement layer (101) is sandwiched between the back layer (11) and the décor layer (100).

12. The method according to claim 11, wherein at least one of the bonding of the reinforcement layer (101) with the décor layer (100) and/or the bonding of the reinforcement layer (101) with the back layer (11) is provided by an adhesive, preferably a hot-melt adhesive.

13. The method according to claim 11 or 12, wherein the bonding between the décor layer (100) and the reinforcement layer (101) is provided by an adhesive, preferably a hot-melt adhesive and wherein the bonding between the back layer (11) and the reinforcement layer (101) is provided by a glue.

14. The method as claimed in any of claims 11-13, further comprising cutting a plurality of grooves (13) into the décor layer (100) and further into the back layer (11).

15. The method as claimed in any of claims 11-14, wherein the cutting is performed by a cutting tool which is caused to rotate about an axis that is parallel with the principal plane (XZ) and perpendicular to the groove (13).
